# EUROPEAN PATENT APPLICATION

(11) **EP 3 174 134 A1**
(43) Date of publication of application: **31.05.2017**
(21) Application number: 16200583.9
(22) Date of filing: 24.11.2016
(51) Int. Cl.: H01M 2/10, H01M 2/34

(54) **BATTERY REVERSED POLARITY PROTECTION**

(30) Priority: 25.11.2015 US 201562259752 P
(71) Applicant: Thomson Licensing, 92130 Issy-les-Moulineaux (FR)
(72) Inventor: Neil, Mao, Indianapolis, IN 46290 (US)
(74) Representative: Huchet, Anne

(57) **Abstract**

The present disclosure is directed to a battery holder (100, 200) configured to receive a plurality of batteries (106) and prevent an improper electrical connection that results from an incorrect arrangement of the plurality of batteries (106). In an aspect of the present disclosure, one or more tabs (110, 210) is included on a battery cover (104, 204) to prevent the improper electrical connection of one or more batteries (106) that have been incorrectly inserted and arranged in a battery compartment (118, 218) of the battery holder (100, 200). The one or more tabs (110, 210) of the present disclosure prevent coupling of the batteries (106), and thus prevent any current from being drawn from the batteries (106), when the batteries (106) have been incorrectly arranged within the battery compartment (118, 218). Furthermore, the one or more tabs (110, 210) do not interfere with the proper electrical connection that results from a correct arrangement of the plurality of batteries (106) within the battery compartment (118, 218).

## Description

### TECHNICAL FIELD

The present disclosure generally relates to electronic devices, and more particularly, to a battery holder configured to prevent an improper electrical connection of a plurality of batteries.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

In a typical electronic device powered by four 1.5VDC batteries in series, incorrectly inserting one of the four batteries with a reversed polarity causes the series combination of batteries to deliver 3VDC instead 6VDC to the device. This may be enough to allow the device to operate, in which case the user may be unaware of the incorrect battery installation. While the device may continue to operate, however, the amount of time the device can continue to operate with such an errant installation of batteries will likely be significantly reduced. As can be appreciated, incorrect battery installation can be a problem for a variety of different battery configurations and voltages, not just the aforementioned series combination of four 1.5VDC batteries.

One approach for addressing this problem is electrical, in the design of the device's circuitry. For example, the device's circuitry can be designed so that the device is not activated unless the combination of batteries provides the intended voltage. While this may be possible in some cases, it may not be possible with all circuits. In a typical case, the device may be only partially activated and the batteries will continue to be drained, thereby reducing operational life. Moreover, in cases in which the circuitry has been finalized, it may not be possible to modify the circuitry to provide the desired behavior when there is a battery insertion error. Even if possible, an electrical solution to the problem of incorrect battery insertion may be undesirable for a variety of reasons, such as cost or complexity, among others.

### SUMMARY

In one aspect of the present disclosure, a battery holder is provided that includes a body having a compartment configured to enable insertion of at least one first battery and at least one second battery, wherein the at least one first battery and the at least one second battery may be inserted in a correct arrangement to create a proper electrical connection of the at least one first battery and the at least one second battery and produce a correct supply voltage at a first terminal and a second terminal of the battery holder or may be inserted in an incorrect arrangement to create an improper electrical connection of the at least one first battery and the at least one second battery and produce an incorrect supply voltage at the first terminal and the second terminal of the battery holder; and a cover configured to connect to the body and retain the at least one first battery and at least one second battery in the compartment, wherein the cover includes at least one tab formed from a non-conductive material and protruding from the cover to extend into the compartment when the cover is connected to the body, and the at least one tab is configured to extend between the at least one first battery and the at least one second battery in the incorrect arrangement and prevent the improper electrical connection.

### BRIEF SUMMARY OF THE DRAWINGS

These, and other aspects, features and advantages of the present disclosure will be described or become apparent from the following detailed description of the preferred embodiments, which is to be read in connection with the accompanying drawings.
FIG. 1A is a top view of a battery holder with a battery cover removed in accordance with an embodiment of the present disclosure;
FIG. 1B is an exploded perspective view of the battery holder of FIG. 1A in accordance with the present disclosure;
FIG. 2 is a perspective view of a plurality of batteries disposed on the battery cover of FIG. 1A in accordance with the present disclosure;
FIG. 3A is a top view of FIG. 2 with the plurality of batteries in a correct arrangement in accordance with the present disclosure;
FIG. 3B is a top view of FIG. 2 with the plurality of batteries in an incorrect arrangement in accordance with the present disclosure;
FIG. 4A is a side view of a tab of the cover of FIG. 1A that includes a wedge portion in accordance with an embodiment of the present disclosure;
FIG. 4B is a top view of the tab of FIG. 4A in accordance with the present disclosure;
FIG. 4C is a perspective view of the tab of FIG. 4A in accordance with the present disclosure;
FIG. 5A is a perspective view of a plurality of batteries in a correct arrangement on a battery cover including one or more tabs that include extension members in accordance with an embodiment of the present disclosure;
FIG. 5B is a perspective view of the plurality of batteries and battery cover of FIG. 5A with the plurality of batteries in an incorrect arrangement in accordance with the present disclosure;
FIG. 6A is a top view of FIG. 5A in accordance with the present disclosure;
FIG. 6B is a top view of FIG. 5B in accordance with the present disclosure;
FIG. 7A is a side view of FIG. 5A in accordance with the present disclosure;
FIG. 7B is a side view of FIG. 5B in accordance with the present disclosure;
FIG. 8A is a side cross-sectional view of the plurality of batteries and the battery cover of FIG. 5A connected to a body of a battery holder, where the plurality of batteries are in a correct arrangement in accordance with the present disclosure;
FIG. 8B is a side cross-sectional view of the plurality of batteries and the battery cover of FIG. 5A connected to a body of a battery holder, where the plurality of batteries are in an incorrect arrangement in accordance with the present disclosure;
FIG. 8C is another side cross-sectional view of the plurality of batteries and the battery cover of FIG. 5A connected to a body of a battery holder, where the plurality of batteries are in an incorrect arrangement in accordance with the present disclosure;
FIG. 9A is a perspective view of a battery cover including one or more tabs that include extension members in accordance with another embodiment of the present disclosure;
FIG. 9B is a top view of the battery cover of FIG. 9A with a plurality of batteries in a correct arrangement in accordance with the present disclosure;
FIG. 9C is a side cross-sectional view of the plurality of batteries and the battery cover of FIG. 9A connected to a body of a battery holder, where the plurality of batteries are in a correct arrangement in accordance with the present disclosure;
FIG. 9D is a side cross-sectional view of the plurality of batteries and the battery cover of FIG. 9A connected to a body of a battery holder, where the plurality of batteries are in an incorrect arrangement in accordance with the present disclosure;
FIG. 10 is a perspective view of one of the tabs of FIG. 5A and 9A where each extension member includes a wedge portion in accordance with an embodiment of the present disclosure;
FIG. 11 is a top view of a battery holder with a battery cover removed in accordance with another embodiment of the present disclosure;
FIG. 12 is a perspective view of the battery cover of FIG. 11 with a plurality of batteries in a correct arrangement, where the battery cover includes a tab with at least three extension members in accordance with an embodiment of the present disclosure;
FIG. 13A is a top view of FIG. 12 in accordance with the present disclosure;
FIG. 13B is a top view of the battery cover of FIG. 13A with the plurality of batteries in an incorrect arrangement in accordance with the present disclosure;
FIG. 14 is a perspective view of the tab of FIG. 12 where each of the extension members includes a wedge portion in accordance with an embodiment of the present disclosure.

It should be understood that the drawings are for purposes of illustrating the concepts of the disclosure and is not necessarily the only possible configuration for illustrating the disclosure.

### DETAILED DESCRIPTION

Embodiments of the present disclosure will be described herein below with reference to the accompanying drawings. In the following description, well-known functions or constructions are not described in detail to avoid obscuring the present disclosure in unnecessary detail.

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

The present disclosure is directed to a battery holder configured to receive a plurality of batteries and prevent an improper electrical connection that results from an incorrect arrangement of some or all of the plurality of batteries. In an aspect of the present disclosure, one or more tabs is included on a battery cover to prevent the improper electrical connection of some or all of the batteries that have been incorrectly inserted and arranged in a battery compartment of the battery holder. The one or more tabs of the present disclosure prevent coupling of the batteries, and thus prevent any current from being drawn from the batteries, when the batteries have been incorrectly arranged within the battery compartment. Furthermore, the one or more tabs do not interfere with the proper electrical connection that results from a correct arrangement of the plurality of batteries within the battery compartment.

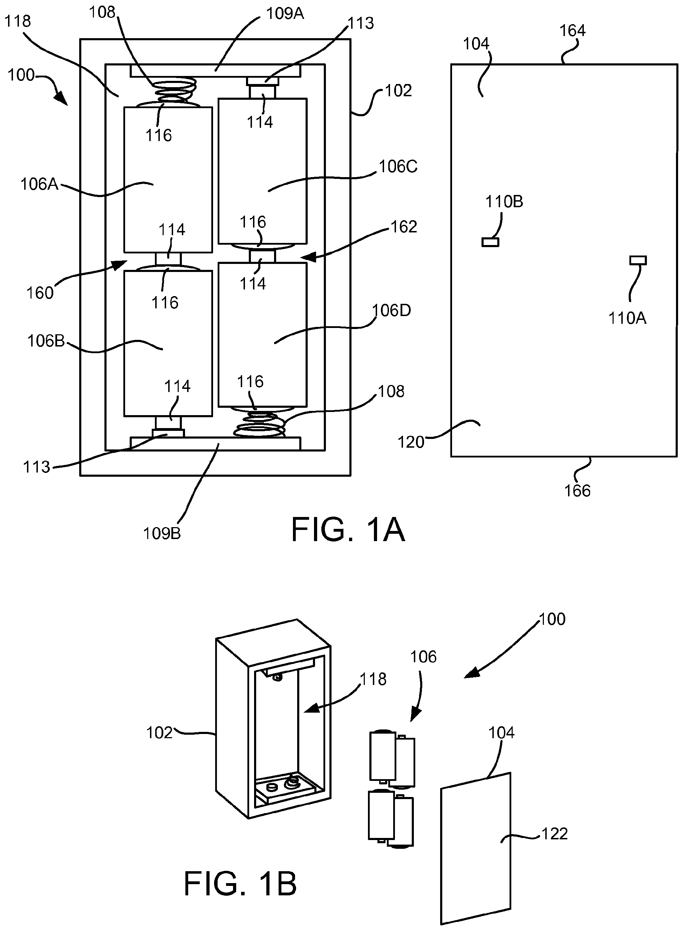

Turning initially to FIGS. 1A and 1B, an electronic device or battery holder 100 is shown in accordance with an embodiment of the present disclosure, where FIG. 1A is a top view of device 100 with a battery cover 104 removed and FIG. 1B is an exploded perspective view of device 100. It is to be appreciated that device 100 may be any device that is partially or fully powered using removable electrical batteries.

As shown in FIGS. 1A and 1B, device 100 includes a main body 102, where main body 102 further includes a compartment 118 that is configured to receive one or more batteries 106. Compartment 118 includes opposite terminals 109A and 109B, where each terminal 109 includes a spring contact element 108 and a protruding contact element 113. Each battery 106 includes a positive terminal 114 and a negative terminal 116. In one embodiment, each positive terminal 114 of battery 106 is a protrusion protruding away from an end of battery 106 and negative terminal 116 is a flat contact element on an opposite end of battery 106. The positive terminal 114 of a battery 106 is configured to be connected with the protruding contact element 113 of each terminal 109 or the flat contact element of negative terminal 116 of another battery 106. Additionally, the negative terminal 116 of a battery 106 is configured to be connected to the spring contact element 108 of each terminal 109.

For example, in one embodiment, device or battery holder 100 receives batteries, 106A, B, C, and D. As shown in FIG. 1A, the negative terminal 116 of battery 106A is coupled to the spring contact element of terminal 109A and the negative terminal of battery 106D is coupled to the spring contact element 108 of opposite terminal 109B of compartment 118. The positive terminals 114 of batteries 106A and 106D are connected to the negative terminals 116 of batteries 106B and 106C, respectively. The positive terminal 114 of battery 106B is connected to the protruding contact element 113 of terminal 109B and the positive terminal 114 of battery 106C is connected to the protruding contact element 113 of terminal 109A of compartment 118.

It is to be appreciated that the arrangement of batteries 106 within compartment 118 shown in FIG. 1A is the correct arrangement for device 100 to create a proper electrical connection of the batteries 106 and terminals 109A, B to produce a correct supply voltage at the opposite terminals 109A, 109B of compartment 118. For example, in one embodiment, each of batteries 106 is a 1.5VDC battery, where batteries 106A-D, when arranged correctly, provide a proper voltage of 6VDC to device 100. However, as stated above, a user may mistakenly arrange one or more of the batteries 106 in a way that produces an incorrect arrangement yet still allows a non-zero voltage to be produced at opposite terminals 109A, 109B. For example, if, in FIG. 1A, battery 106A is arranged such that positive terminal 114 of battery 106A is connected to spring contact 108 of terminal 109A and negative terminal 116 of battery 106A is connected to negative terminal 116 of battery 106B and batteries 106B-D remain in the same arrangement shown in FIG. 1A, this improper arrangement, may still cause a non-zero, incorrect voltage (e.g., 3VDC) to be delivered to the device 100 instead of the correct voltage (e.g., 6VDC).

To address the above described problem, battery cover 104 is configured to include one or more tabs 110 on a side 120 of battery cover 104 in accordance with the present disclosure. Battery cover 104 is configured to be securely coupled to main body 102 to retain batteries 106 in compartment 118. When cover 104 is coupled to main body 102, side 120 of cover 104 is oriented toward compartment 118 and side 122 of cover 118 is oriented away from compartment 118. Tabs 110A and 110B each protrude perpendicularly from side 120 of cover 118, such that, when cover 118 is coupled to main body 102, tabs 110A and 110B extend into compartment 118, where tab 110A extends into an area or gap 160 between batteries 106A and 106B and tab 110B extends into an area or gap 162 between batteries 106C and 106D. As will be described below, each tab 110 is configured to prevent an improper electrical connection between two batteries 106 that are in an incorrect electrical arrangement.

It is to be appreciated that, as shown in FIG. 1A, in one embodiment, area 160 is closer to terminal 109B than area 162, and area 162 is closer to terminal 109A than area 160. To ensure tab 110A properly extends into area 160 and tab 110B properly extends into area 162, tab 110A is disposed closer to an edge 166 of cover 104 than an edge 164 of cover 104 and tab 110B is disposed closer to edge 164 of cover 104 than edge 166 of cover 104.

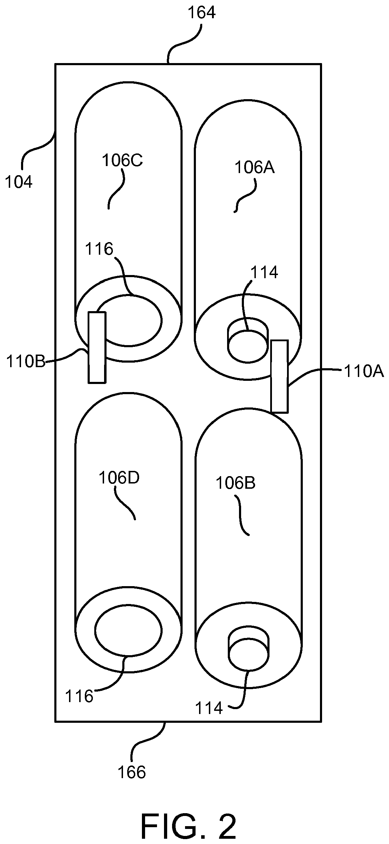

Referring to FIG. 2, a perspective view of battery cover 104 is shown with batteries 106A-D arranged correctly against cover 104 as batteries 106A-D would sit when batteries 106A-D are disposed in compartment 118 and battery cover 104 is coupled to main body 102 in accordance with the present disclosure. It is to be appreciated, that batteries 106B and 106D are shown slightly separated from batteries 106A and 106C in FIG. 2 for visibility.

As shown in FIG. 2, in one embodiment, when cover 104 is coupled to main body 104 and batteries 106A-D are in the correct arrangement described above, tab 110A extends between batteries 106A and 106B, such that, tab 110A is disposed on a side of the protruding contact element of positive terminal 114 of battery 106A, i.e., not in contact with the terminal or battery. Similarly, tab 110B extends between batteries 106C and 106D, such that, tab 110A is disposed on a side (not shown) of the protruding contact element of positive terminal 114 of battery 106D, i.e., not in contact with the terminal or battery.

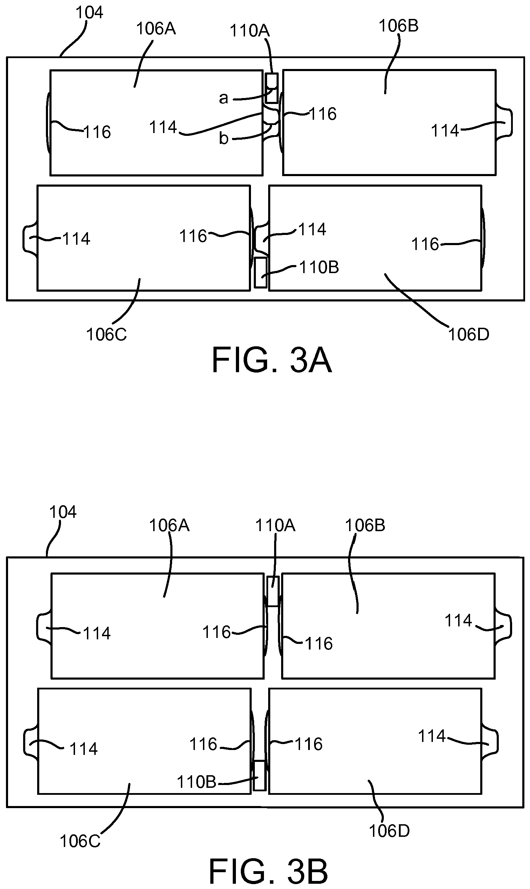

Referring to FIG. 3A, a top view of battery cover 104 is shown with batteries 106A-D arranged properly against cover 104 as batteries 106A-D would sit when batteries 106A-D are disposed in compartment 118 and battery cover 104 is coupled to main body 102 in accordance with the present disclosure. As shown in FIG. 3A, the thickness of each of tabs 110 (denoted in FIG. 3A as "a") is less than the thickness of the protruding contact element of positive terminal 114 (denoted in FIG. 3A as "b"). In this way, tabs 110 are configured such that when batteries 106A-D are arranged properly, tabs 110 do not interfere with the proper electrical connection of positive terminal 114 of battery 106A with negative terminal 116 of battery 106B and positive terminal 114 of battery 106D with negative terminal 116 of battery 106C. When the batteries are properly arranged, the tabs 110 are disposed between two batteries 106 without making contact with both the positive terminal 114 of one battery 106 (e.g., battery 106A) and negative terminal 116 of another battery 106 (e.g., 106B) at the same time, and thus not separating the batteries 106.

However, referring to FIG. 3B, a top view of battery cover 104 is shown with batteries 106A-D arranged improperly against cover 104 as batteries 106A-D would sit when batteries 106A-D are disposed in compartment 118 and battery cover 104 is coupled to main body 102 in accordance with the present disclosure. However, when batteries 106 are arranged as shown in FIG. 3B, such that, the one or more of negative terminals 116 of batteries 106 are facing each other (i.e., an incorrect arrangement), tab 110A separates or divides the negative terminals 116 of batteries 106A and 106B and tab 110B separates or divides the negative terminals 116 of batteries 106C and 106D, such that, tabs 110 prevent an improper electrical connection between batteries 106. It is to be appreciate that tabs 110 are made of non-conductive material, such as, but not limited to, acrylonitrile butadiene styrene (ABS), Polyethylene/Acrylonitrile Butadiene Styrene (PE/ABS), Polycarbonate (PC), Polycarbonate/Acrylonitrile Butadiene Styrene (PC/ABS), High impact polystyrene (HIPS), nylon, or most plastics.

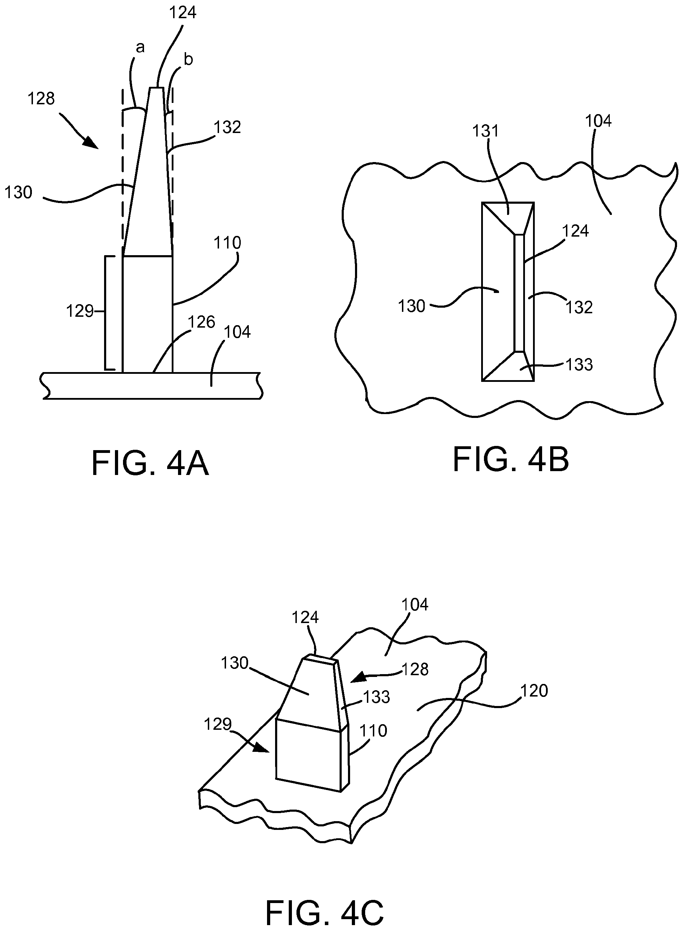

In one embodiment, an end of tab 110 may be configured in a wedge shape to aid in the separation of two improperly connected negative terminals 116 (as shown in FIG. 3B) of batteries 106. For example, referring to FIGS. 4A, 4B, and 4C, tab 110 is shown in greater detail in accordance with an embodiment of the present disclosure, where FIG. 4A shows a side view of tab 110, FIG. 4B shows a top view of tab 110, and FIG. 4C shows a perspective view of tab 110. As shown in FIG. 4A-C, tab 110 includes ends 124 and 126. A base portion 129 of tab 110 is coupled to side 120 of cover 104 at end 126 of tab 110 and a wedge portion 128 of tab 110 extends perpendicularly away from side 120 of cover 104. In one embodiment, wedge portion 128 includes sides 130, 131, 132, and 133, where side 130 is opposite to side 132 and side 131 is opposite to side 133. Sides 130, 131, 132, and 133 each converge toward end 124 of tab 110. Because wedge portion 128 converges towards end 124 of tab 110, when cover 104 is coupled to main body 102, tab 110 can easily wedge between two batteries 106 connected serially, even when two negative terminals 116 are touching.

It is to be appreciated then when tab 110 is between two batteries 106, sides 130 and 132 face the terminals of each battery that are closest to each other, respectively, and sides 131 and 133 face directions perpendicular to each of the terminals that are closest to each other. For example, referring to the arrangement of FIG. 3B, sides 130 and 132 of wedge portion 128 of tab 110A would face each of terminals 116 of batteries 106A and 106B, and sides 131 and 132 would face directions perpendicular to the direction that terminals 116 face.

As shown in FIG. 4A, in one embodiment, side 130 of wedge portion 128 forms an angle "a" in relation to base portion 129 and side 132 forms an angle "b" in relation to base portion 129, where angle "a" is larger than angle "b". Since angle "a' is larger than angle "b", end 124 is off-center (as best shown in FIG. 4B). This arrangement further aids tab 110 to easily wedge between two batteries 106 connected serially, even when two negative terminals 116 are touching because end 124 is less likely to be obstructed from a surface of one of batteries 106, for example, when tab 110 separates the negative terminals 116 of two batteries 106 facing each other.

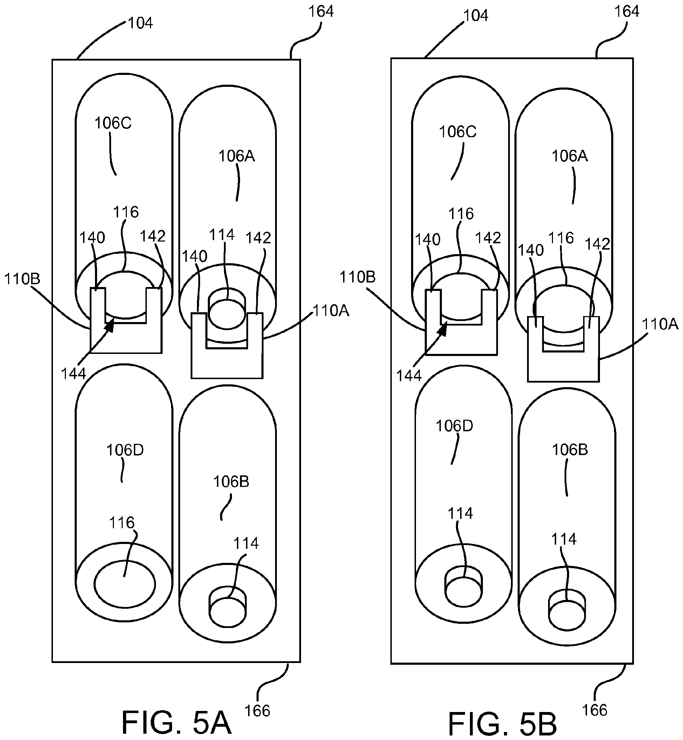

Referring to FIG. 5A, a perspective view of battery cover 104 is shown with batteries 106A-D arranged properly against cover 104 as batteries 106A-D would sit when batteries 106A-D are disposed in compartment 118 and battery cover 104 is coupled to main body 102 in accordance with the present disclosure. It is to be appreciated, that batteries 106B and 106D are shown slightly separated from batteries 106A and 106C in FIG. 5A for visibility.

Each tab 110 in FIG. 5A includes a pair of extension members 140, 142, where each extension member extends perpendicularly from cover 104 into compartment 118 when cover 104 is coupled to compartment 118. Disposed between extension members 140 and 142 is an aperture 144. Aperture 144 is configured such that, when tab 110 is disposed between two batteries, for example, batteries 106A and 106B, that are arranged properly, the protruding contact element of positive terminal 114 of battery 106A is disposed in aperture 144 and is able to make contact with the flat contact element of negative terminal 116 of battery 106B. It is to be appreciated that, as described above, tab 110A is disposed closer to edge 166 than edge 164 and tab 110B is disposed closer to edge 164 than edge 166 (as shown in FIG. 5A).

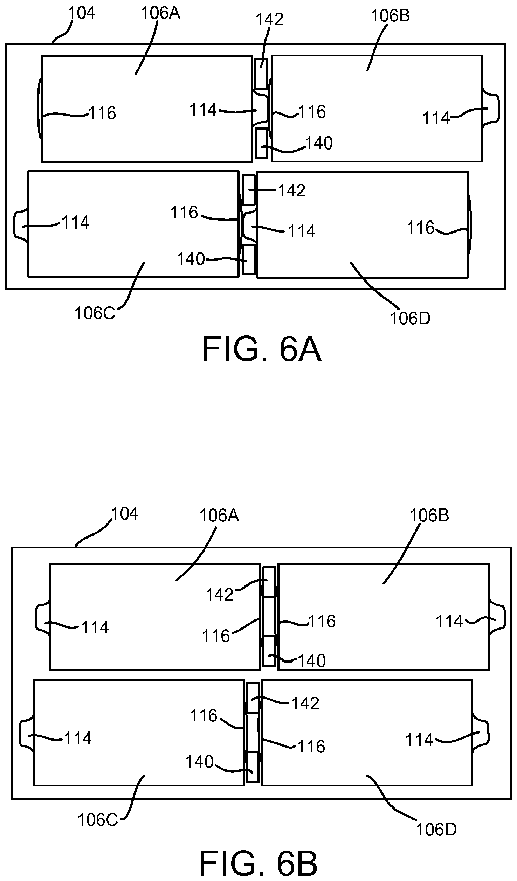

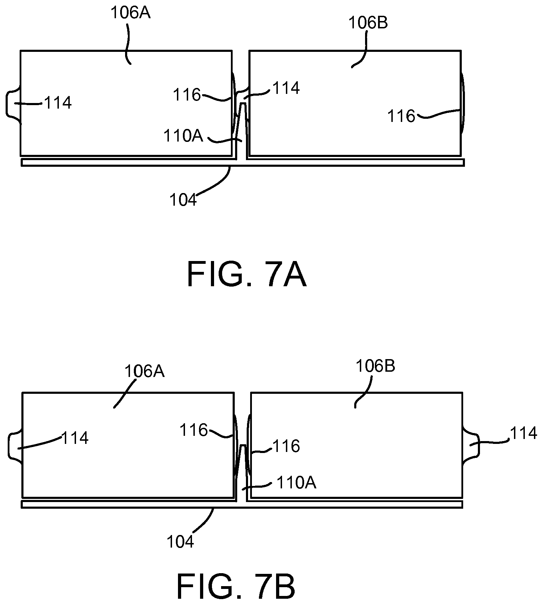

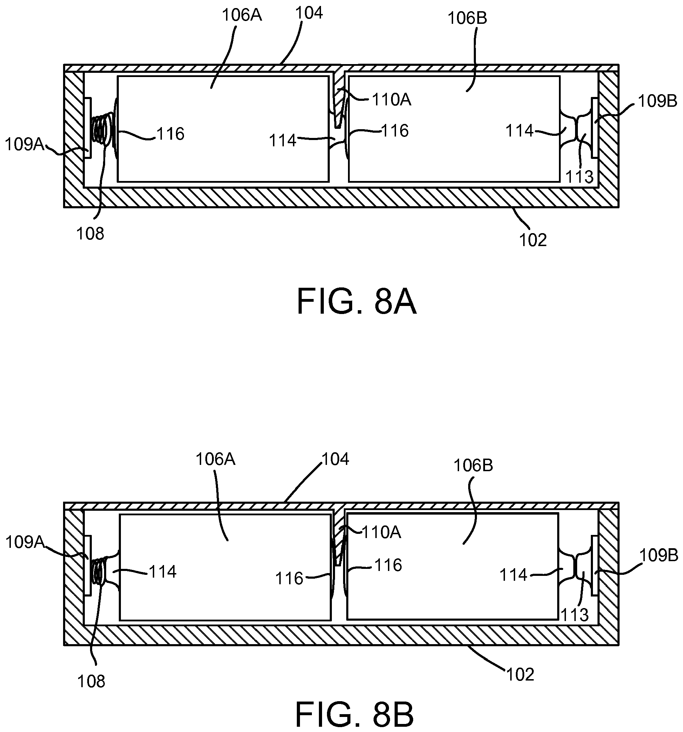

Referring to FIG. 6A and 7A, a top view of FIG. 5A is shown in FIG. 6A and a side view of FIG. 5A is shown in FIG. 7A in accordance with the present disclosure. Referring to FIG. 8A, a side cross-sectional view of batteries 106A-D disposed in compartment 118 while arranged properly with cover 104 connected to main body 102 is shown in accordance with the present disclosure. As shown in FIGS. 6A, 7A and 8A, extension members 140 and 142 of tabs 110 are configured such that, when batteries 106A-D are arranged properly, extension members 140, 142 of tabs 110 do not interfere with the proper electrical connection of positive terminal 114 of battery 106A with negative terminal 116 of battery 106B and positive terminal 114 of battery 106D with negative terminal 116 of battery 106C. It is to be appreciated that the thickness of extension members 140, 142 is chosen such that the protruding contact elements of positive terminals 114 of batteries 106A and 106D may pass through apertures 144 and make contact with the flat contact element of the negative terminals 116 of batteries 106B and 106C, respectively.

Referring to FIGS. 5B, 6B, and 7B, batteries 106A and 106D are shown in an improper arrangement (i.e., with the negative terminals 116 facing each other). Referring to FIG. 8B, a side cross-sectional view is illustrated of batteries 106A-D disposed in compartment 118 while arranged improperly (i.e., with negative terminals 116 facing each other) with cover 104 connected to main body 102 in accordance with the present disclosure. As shown in FIG. 6B, 7B, and 8B, when batteries 106 are arranged, such that, the one or more of negative terminals 116 of batteries 106 are facing each other (i.e., an incorrect arrangement), extension members 140, 142 of tab 110 separate or divide the negative terminals 116 of batteries 106A and 106B and the negative terminals 116 of batteries 106C and 106D, such that, tabs 110 prevent an improper electrical connection between batteries 106.

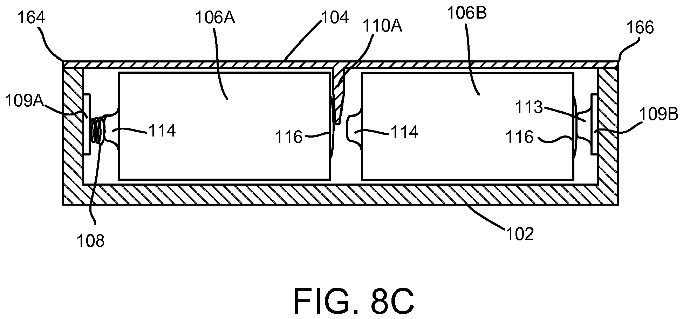

Although in the embodiments described above, an incorrect arrangement of batteries 106 has been described as occurring when the negative terminals 116 of two batteries 106 are connected, there are other possible improper arrangements of batteries 106 as well. For example, referring to FIG. 8C, another cross-sectional view of batteries 106A-D disposed in compartment 118 while arranged improperly with cover 104 connected to main body 102 is shown in accordance with the present disclosure. In FIG. 8C, each of batteries 106A and 106B are shown in an incorrect position. The protruding contact element of positive terminal 114 of battery 106A is incorrectly connected to the spring contact element of terminal 109A of compartment 118 and the flat contact element of the negative terminal 116 of battery 106B is incorrectly connected to protruding contact element 113 of terminal 109B. However, as shown in FIG. 8C, because tab 110A is disposed closer to edge 164 of cover 104 than edge 166 of cover 104, battery 106A is pushed into spring contact element 108, such that, the protruding contact element of positive terminal 114 of battery 106B is unable to connect with the flat contact element of the negative terminal of battery 106A. In this way, tab 110A prevents the improper electrical connection resulting from the improper arrangement of batteries 106A and 106B shown in FIG. 8C.

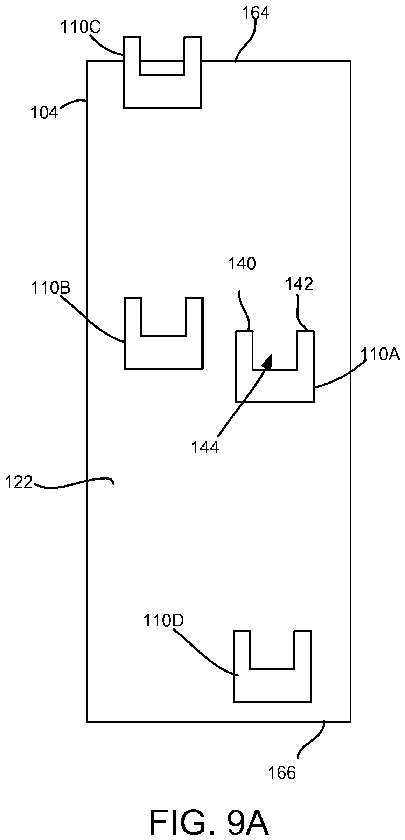

In another embodiment, cover 104 may include one or more tabs 110 closer to edges 164, 166. For example, referring to FIG. 9A, a perspective view of cover 104 including tabs 110A, 110B, 110C, and 110D is shown in accordance with the present disclosure. As shown in FIG. 9A, tabs 110C and 110D are included in cover 104 in addition to tabs 110A and 110B. Like tabs 110A and 110B, tabs 110C and 110D each extend perpendicularly from surface 122 of cover 104. Tab 110C is disposed in close proximity to edge 164 of cover 104 and tab 110D is disposed in close proximity to edge 166 of cover 104.

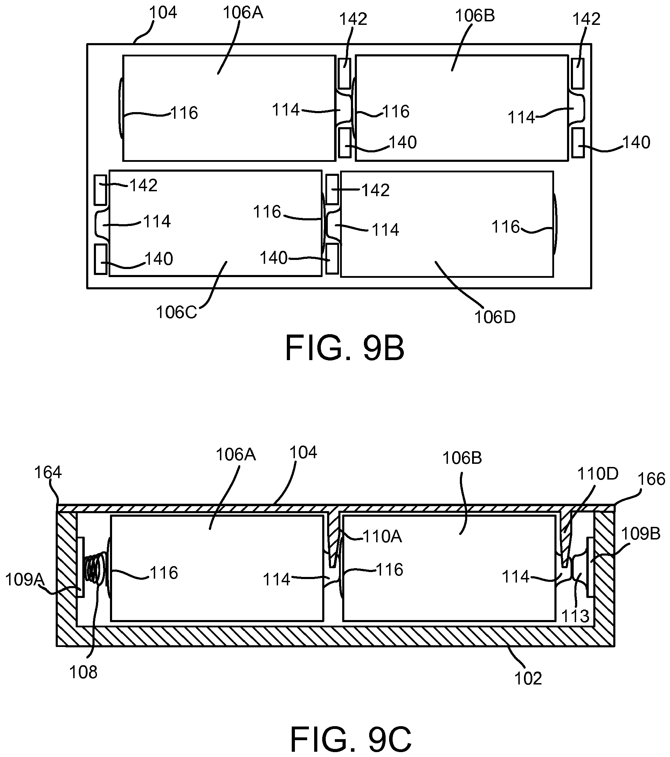

As with the embodiments described above, the cover 104 shown in FIG. 9A, does not interfere with the proper arrangement of batteries 106. For example, referring to FIG. 9B, a top view of batteries 106A-D arranged correctly against cover 104 as batteries 106A-D would sit when batteries 106A-D are disposed in compartment 118 and battery cover 104 is coupled to main body 102 in accordance with the present disclosure. Furthermore, referring to FIG. 9C, a side cross-sectional view of batteries 106A-D disposed in compartment 118 while arranged correctly is illustrated. As shown in FIGS. 9B and 9C, when batteries 106A-D are in a correct arrangement the protruding contact element of the positive terminal 114 of battery 106B is disposed through the aperture 144 of tab 110C and connected to the protruding contact element 113 of terminal 109B. Also, the protruding contact element of the positive terminal 114 of battery 106C is disposed through the aperture 144 of tab 110D (as shown in FIG. 9B) and connected to the protruding contact element 113 of terminal 109A (not shown).

It is to be appreciated that the cover 104 shown in FIGS. 9A-C prevents the incorrect arrangements of batteries 106A-D described above (e.g., where two negative terminals 116 are connected and where a positive terminal 114 is connected to a spring contact element 108). Additionally, the cover 104 shown in FIGS. 9A-C prevents the incorrect arrangement of batteries 106A-D that results from either or both of batteries 106B and 106C being reversed from the correct position shown in FIG. 9B (also shown in FIG. 1A). In other words, the cover 104 shown in FIGS. 9A-C prevents the flat contact elements of the negative terminals 116 of batteries 106B and 106C from coming into contact or incorrectly connecting with the protruding contact elements of terminals 109A and 109B.

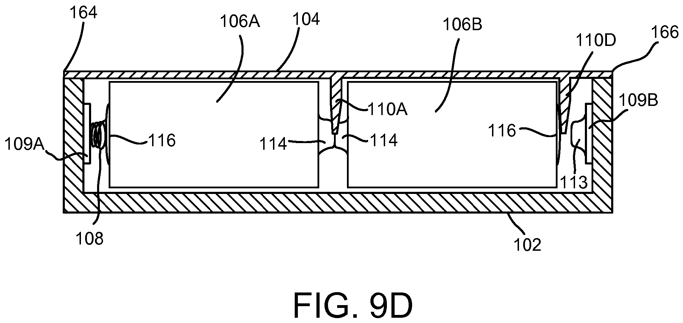

For example, referring to FIG. 9D, the side cross-sectional view of FIG. 9C is shown, however, battery 106B has been reversed (i.e., positive terminal 114 of battery 106B is connected to positive terminal 114 of battery 106A). As shown in FIG. 9D, tab 110D prevents the flat contact element of negative terminal 116 of battery 106B from incorrectly connecting with the protruding contact element 113 of terminal 109B. Although not shown, tab 110C similarly prevents the flat contact element 113 of negative terminal 116 of battery 106C from incorrectly connecting with the protruding contact element 113 of terminal 109A.

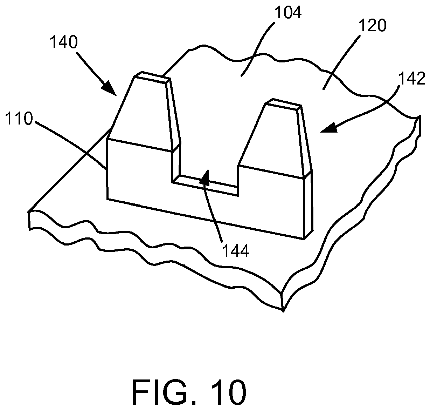

In one embodiment, extension members 140, 142 of tab 110 of FIGS. 5-9 are each configured as wedge portions, similar to wedge portion 128, described above. For example, referring to FIG. 10, tab 110 is shown including extension members 140, 142 configured as wedge portions in accordance with the present disclosure. As shown in FIG. 10, each of extension members 140 and 142 converge in a direction away from side 120 of cover 104. As described above, the wedge shape formed by wedge extension members 140, 142 is advantageous for separating the improperly connected negative terminals 116 of two batteries 106 when cover 104 is connected to main body 102.

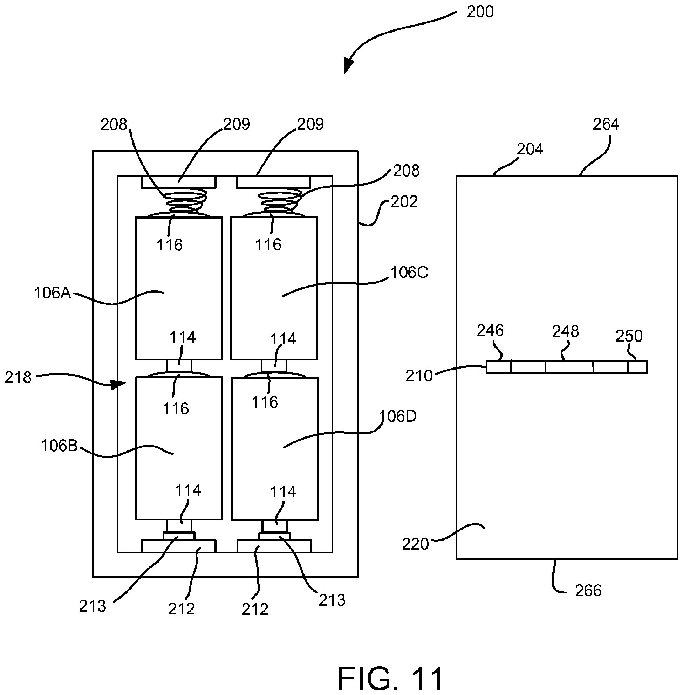

Referring to FIG. 11, a top view of an electronic device or battery holder 200 is shown in accordance with another embodiment of the present disclosure. Device 200 includes a main body 202, where main body 202 further includes a compartment 218 that is configured to receive one or more batteries 106. Compartment 218 includes one or more terminals 209 and 212, where each terminal 209 includes a spring contact element 208 and each terminal 212 includes a protruding contact element 213. When batteries 106A-D are in a correct arrangement (as shown in FIG. 11), the flat contact elements of negative terminals 116 of batteries 106A and 106C are each coupled to a terminal 209 of compartment 218 via spring contacts 208. The protruding contact elements of positive terminals 114 of batteries 106A and 106C are connected to the flat contact elements of the negative terminals 116 of batteries 106B and 106D, respectively. The protruding contact elements of positive terminals 114 of batteries 106B and 106D are each coupled to the protruding contact elements 213 of terminals 212 of device or battery holder 200.

It is to be appreciated that the arrangement of batteries 106 within compartment 218 shown in FIG. 11 is the correct arrangement for device 200 to create a proper electrical connection of the batteries 106 and terminals 209 and 212 to produce a correct supply voltage at terminals 209 and 212. However, as stated above, a user may mistakenly arrange one or more of the batteries 106 in a way that produces an incorrect arrangement yet still allows a non-zero voltage to be produced at terminals 209 and 212. For example, if, in FIG. 11, battery 106A was arranged such that positive terminal 114 of battery 106A is connected to terminal 209 via spring contact 208 and negative terminal 116 of battery 106A is connected to negative terminal 116 of battery 106B and batteries 106B-D remain in the same arrangement shown in FIG. 11, this incorrect arrangement, may still cause a non-zero, incorrect voltage (e.g., 3VDC) to be delivered to the device 200 instead of the correct voltage (e.g., 6VDC).

To address the above described problem, battery cover 204 is configured to include a single tab 210 in accordance with the present disclosure. Battery cover 204 is configured to be securely coupled to main body 202 to retain batteries 106 in compartment 218. When cover 204 is coupled to main body 202, side 220 of cover 204 is oriented toward compartment 218. Tab 210 protrudes perpendicularly from side 220 of cover 204, such that, when cover 204 is coupled to main body 202, tab 210 extends into compartment 218 in between batteries 106A and 106B and batteries 106C and 106D.

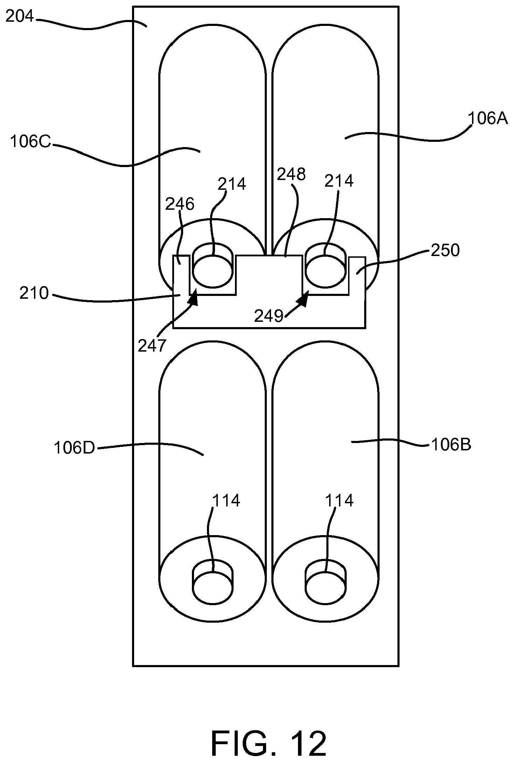

Referring to FIG. 12, a perspective view of battery cover 204 is shown with batteries 106A-D arranged properly against cover 204 as batteries 106A-D would sit when batteries 106A-D are disposed in compartment 218 and battery cover 204 is coupled to main body 202 in accordance with the present disclosure. It is to be appreciated, that batteries 106B and 106D are shown slightly separated from batteries 106A and 106C in FIG. 12 for visibility.

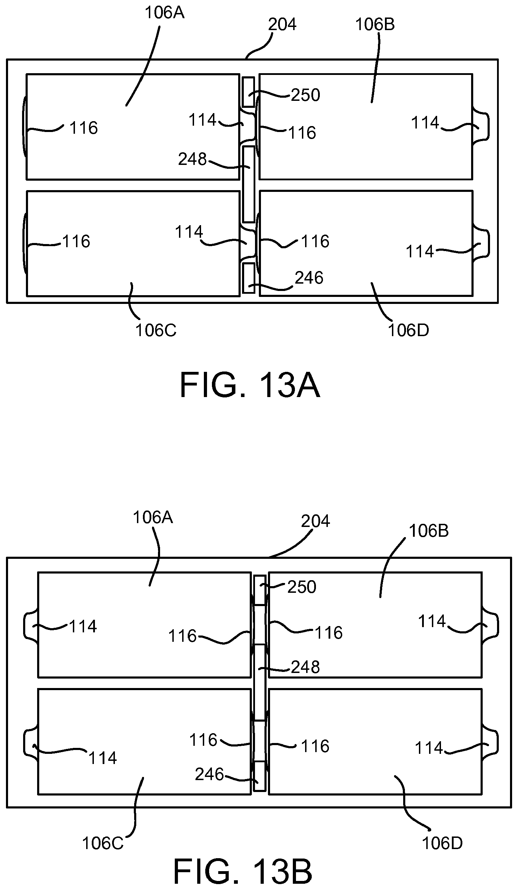

As shown in FIG. 12, tab 210 includes extension members 246, 248, and 250, where aperture 247 is disposed between extension members 246 and 248 and aperture 249 is disposed between extension members 248 and 250. When cover 204 is connected to main body 202, tab 210 extends between batteries 106A, 106C and 106B, 106D, such that, when batteries 106A-D are arranged properly (as is the case in FIG. 12), the protruding contact element of positive terminal 114 of battery 106A can pass through aperture 247 and make contact with the flat contact element of negative terminal 116 of battery 106B and the protruding contact element of positive terminal 114 of battery 106C can pass through aperture 249 and make contact with the flat contact element of negative terminal 216 of battery 106D. In this way, tab 210 does not interfere with the electrical connection that occurs between batteries 106A-D when batteries 106A-D are arranged properly within compartment 218. A top view of the cover 204 of FIG. 11 is shown in FIG. 13A in accordance with the present disclosure.

Referring to FIG. 13B, a top view of batteries 106A-D arranged incorrectly (e.g., with negative terminals 116 facing each other) is illustrated. As shown in FIG. 13B, tab 210 is configured such that, when negative terminals 116 of batteries 106A and 106B and/or 106C and 106D face each other, negative terminals 116 of batteries 106A and 106B and/or 106C and 106D are prevented from coming into contact with each other, thus preventing an improper electrical connecting between batteries 106A-D within compartment 218.

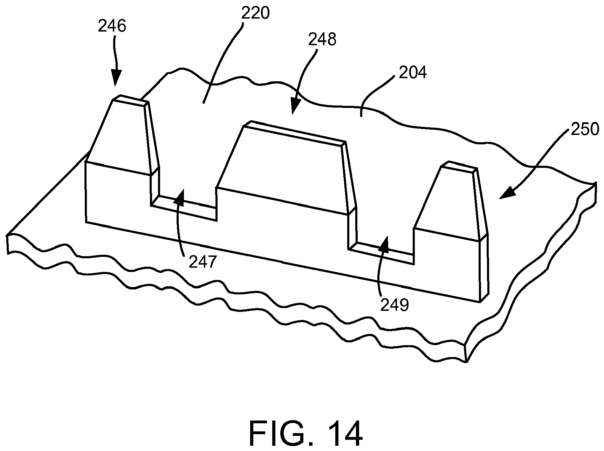

In one embodiment, extension members 246, 248, 250 are each configured as wedge portions, similar to wedge portion 128, described above. For example, referring to FIG. 14, tab 210 is shown including extension members 246, 248, 250, where each is configured as a wedge portion in accordance with the present disclosure. As shown in FIG. 14, each of extension members 246, 248, 250 converge in a direction away from side 220 of cover 204. As described above, the wedge shape formed by wedge extension members 246, 248, 250 is advantageous for separating the improperly connected negative terminals 116 of two batteries 106 when cover 204 is connected to main body 202.

It is to be appreciated that any of tabs 110 described above may be used with cover 204 instead of tab 210 to prevent the improper electrical connection of batteries 106 within compartment 218 of device 200. As shown in FIG. 11, the area or gap between batteries 106A and 106 B and batteries 106C and 106D is equidistant from terminals 109 and 112. Therefore, to implement tabs 110 with cover 204, tabs 110 may each be disposed an equal distance from edges 264, 266 (shown in FIG. 11) of cover 204.

Although the above described embodiments show and describe cylindrical-shaped electrical batteries (e.g., AA cell batteries, etc.), cover 104/204 and tabs 110/210 described above may also be used with batteries of other shapes, such as, but not limited to, cube-shaped batteries (e.g., 9-Volt batteries), to prevent improper electrical connections that result from batteries 106 being incorrectly arranged. Furthermore, although the above described embodiments are described in relation to four batteries 106, it is to be appreciated that the present disclosure applies to any number of batteries that are connected in series (e.g., 2, 3, 6, 12, etc.), where a battery cover 104 is configured with enough tabs 110/210 to extend between each of the batteries 106 that are connected in series to prevent in improper electrical connection.

It is to be appreciated that in another embodiment of the present disclosure, the various tabs 110/210 described above may be disposed in compartment 118 instead of being connected to cover 104/204.

It is to be appreciated that the various features shown and described are interchangeable, that is a feature shown in one embodiment may be incorporated into another embodiment.

Although embodiments which incorporate the teachings of the present disclosure have been shown and described in detail herein, those skilled in the art can readily devise many other varied embodiments that still incorporate these teachings. Having described preferred embodiments of a battery holder apparatus (which are intended to be illustrative and not limiting), it is noted that modifications and variations can be made by persons skilled in the art in light of the above teachings. It is therefore to be understood that changes may be made in the particular embodiments of the disclosure disclosed which are within the scope of the disclosure.

## Claims

1. A battery holder (100, 200) comprising:
a body (102, 202) having a compartment (118, 218) configured to enable insertion of at least one first battery (106) and at least one second battery (106), wherein the at least one first battery (106) and the at least one second battery (106) may be inserted in a correct arrangement to create a proper electrical connection of the at least one first battery (106) and the at least one second battery (106) and produce a correct supply voltage at a first terminal (109A, 209) and a second terminal (109B, 212) of the battery holder (100, 200) or may be inserted in an incorrect arrangement to create an improper electrical connection of the at least one first battery (106) and the at least one second battery (106) and produce an incorrect supply voltage at the first terminal (109A, 209) and the second terminal (109B, 212) of the battery holder (100); and
a cover (104, 204) configured to connect to the body (102, 202) and retain the at least one first battery (106) and at least one second battery (106) in the compartment (118, 218), wherein
the cover (104, 204) includes at least one tab (110, 210) formed from a non-conductive material and protruding from the cover (104, 204) to extend into the compartment (118, 218) when the cover (104, 204) is connected to the body (102, 202), and
the at least one tab (110, 210) is configured to extend between the at least one first battery (106) and the at least one second battery (106) in the incorrect arrangement and prevent the improper electrical connection.

2. The battery holder (100, 200) of claim 1, wherein the at least one tab (110, 210) includes a wedge portion (128) that includes a first side (130) and a second side (132) that are opposite to each other, the first side (130) and the second side (132) of the wedge portion (128) converging in a direction away from the cover (104, 204).

3. The battery holder (100, 200) of claim 1 or claim 2, wherein the at least one first battery (106) includes a first positive terminal (114) and a first negative terminal (116), the first positive terminal (114) including a first protruding contact element and the first negative terminal (116) including a first flat contact element, and the at least one second battery including a second positive terminal (114) and a second negative terminal (116), the second positive terminal (114) including a second protruding contact element and the second negative terminal (116) including a second flat contact element.

4. The battery holder (100, 200) of claim 3, wherein when the at least one first battery (106) and the at least one second battery (106) are in the correct arrangement, the first protruding contact element is connected to the second flat contact element, and when the cover (104, 204) is connected to the body (102, 202), the at least one tab (110, 210) extends between the at least one first battery (106) and the at least one second battery (106) without interfering with the connection between the first protruding contact element and the second flat contact element.

5. The battery holder (100, 200) of claim 4, wherein when the at least one first battery (106) and the at least one second battery (106) are in the incorrect arrangement, the first flat contact element is connected to the second flat contact element, and when the cover (104, 204) is connected to the body (102, 202), the at least one tab (110, 210) extends between the at least one first battery (106) and the at least one second battery (106) and separates the first flat contact element from the second flat contact element to prevent the improper electrical connection between the at least one first battery (106) and the at least one second battery (106).

6. The battery holder (100, 200) of claim 4, wherein when the at least one first battery (106) and the at least one second battery (106) are in the incorrect arrangement, the second protruding contact element is connected to the first flat contact element, and when the cover (104, 204) is connected to the body (102, 202), the at least one tab (110, 210) extends between the at least one first battery (106) and the at least one second battery (106) and separates the second protruding contact element from the first flat contact element to prevent the improper electrical connection between the at least one first battery (106) and the at least one second battery (106).

7. The battery holder (100, 200) of claim 5 or 6, wherein the at least one tab includes a first extension member (140, 246) and a second extension member (142, 248) defining a first aperture (144, 247) disposed between the first extension member (140, 246) and the second extension member (142, 248), the first extension member (140, 246) and the second extension member (142, 248) extending into the battery compartment (118, 218) when the cover (104, 204) is connected to the body (102, 202).

8. The battery holder (100, 200) of claim 7, wherein when the at least one first battery (106) and the at least one second battery (106) are in a correct arrangement, the first protruding contact element is disposed in the first aperture (144, 247) and connected to the second flat contact element.

9. The battery holder (100, 200) of claim 7, wherein the first extension member (140, 246) includes a first wedge portion and the second extension (142, 248) member includes a second wedge portion and the first and second wedge portion each converge in a direction away from the cover (104, 204).

10. The battery holder (100, 200) of claim 8 or 9, wherein the compartment (118, 218) is configured to enable insertion of at least one third battery (106) and at least one fourth battery (106), wherein the at least one third battery (106) includes a third positive terminal (114) and a third negative terminal (116), the third positive terminal (114) including a third protruding contact element and the third negative terminal (116) including a third flat contact element, and the at least one fourth battery (104) including a fourth positive terminal (114) and a fourth negative terminal (116), the fourth positive terminal (114) including a fourth protruding contact element and the fourth negative terminal (116) including a fourth flat contact element.

11. The battery holder (100, 200) of claim 10, wherein the at least one first tab (110, 210) further includes a third extension member (250) and a second aperture (249) disposed between the second extension member (248) and the third extension member (250).

12. The battery holder (100, 200) of claim 11, wherein when the at least one first, second, third, and fourth batteries (106) are in a correct arrangement, the first protruding contact element is connected to the second flat contact element and third protruding contact element is connected to the fourth flat contact element, and when the cover (104, 204) is connected to the body (102, 202), the first protruding contact element is disposed in the first aperture (247) and the third protruding contact element is disposed in the second aperture (249) without the at least one tab (110, 210) interfering with the connection between the first protruding contact element and the second flat contact element and between the third protruding contact element and fourth flat contact element.

13. The battery holder (100) of claim 11, wherein when the at least one first, second, third, and fourth batteries (106) are in an incorrect arrangement, the first flat contact element and the second flat contact element are connected and/or the third flat contact element and the fourth flat are connected, and when the cover (104, 204) is connected to the body (102, 202), the at least one tab (110, 210) separates the first flat contact element from the second flat contact element and/or the third flat contact element from the fourth flat contact element to prevent an improper electrical connection between the at least one first, second, third, and fourth batteries (106).

14. The battery holder (100, 200) of any preceding claim, further comprising at least one second tab (110) formed from the non-conductive material and protruding from the cover (104, 204) to extend into the battery compartment (118, 218) between the at least one first battery (106) and the first terminal (109A, 209) to prevent an improper electrical connection between the first battery (106) and the first terminal (109A, 209).

15. The battery holder (100, 200) of any preceding claim, wherein the at least one tab (110, 210) includes a first extension member (140, 246) and a second extension (142, 248) member defining a first aperture (144, 247) disposed between the first extension member (140, 246) and the second extension member (142, 248), the first aperture (144, 247) configured to receive at least one terminal (114) of the at least one first and second battery (106) when the cover (104, 204) is connected to the body (102, 202).

16. The battery holder (100, 200) of claim 15, wherein the at least one first tab (110, 210) further includes a third extension member (250) and a second aperture (249) defined between the second extension member (248) and the third extension member (250), the second aperture configured to receive at least one terminal (114) of another battery (106) when the cover (104, 204) is connected to the body (102, 202).
